Europäisches Patentamt

European Patent Office

Office européen des brevets

(19)

(11) EP 1 555 738 A1

(12) **EUROPEAN PATENT APPLICATION**

(43) Date of publication:
 **20.07.2005 Bulletin 2005/29**

(51) Int Cl.⁷: $H02K\ 21/14$, H02K 29/08, H02K 29/14

(21) Application number: **05250212.7**

(22) Date of filing: **17.01.2005**

(84) Designated Contracting States:
 **AT BE BG CH CY CZ DE DK EE ES FI FR GB GR HU IE IS IT LI LT LU MC NL PL PT RO SE SI SK TR**
 Designated Extension States:
 **AL BA HR LV MK YU**

(30) Priority: **15.01.2004 GB 0400829**
 **27.08.2004 GB 0419109**

(71) Applicant: **Pektron Group Limited**
 **Derby, DE21 4AP (GB)**

(72) Inventors:
 • **Morgan, G.**
  **Derby DE21 4AP (GB)**
 • **Morgan, N.**
  **Derby DE21 4AP (GB)**

(74) Representative: **Skinner, Michael Paul**
  **c/o Swindell & Pearson**
  **48 Friar Gate**
  **Derby DE1 1GY (GB)**

(54) **Motor control**

(57)   The voltage applied to a brushless electric motor at full speed is shown in Fig. 2a. The drive voltage is repeatedly reversed to form a square wave. A slower speed is achieved by pulses which do not continue for one half of the period (Fig. 2b), leaving a de-energised period between $t_6$ and $t_7$. A slower speed is achieved by pulses (Fig. 2c) which are a smaller percentage of the half period. In other examples, the drive pulses remain symmetrical with respect to the polarity reversal times, or otherwise controlled independence on load, control settings, running speed, torque output required, running temperature or other factors.

Fig. 2a

Fig. 2b

Fig. 2c

**Description**

The present invention relates to the control of electric motors and in particular, to speed control in brushless electric motors.

A conventional brushless electric motor includes at least one, typically several field coils which create a rotating magnetic field in the vicinity of a rotor, which is accordingly caused to rotate. The magnetic field is created by drive currents supplied to the field coils in an appropriate sequence to create the rotation of the magnetic field.

The present invention provides a method of controlling the speed of a brushless electric motor which has a rotor and at least one field coil to which drive voltage is supplied, in use, to cause the rotor to turn, wherein the or each field coil is energised by drive voltages supplied during a time period in which the rotor is travelling through a corresponding predetermined range of angular positions, and wherein at least one pulse of drive voltage is supplied to the or each coil synchronously with the coil entering the corresponding range, the pulse or pulses having an aggregate duration which is set in accordance with the desired motor speed.

Preferably, a single pulse is generated synchronously with the coil entering the corresponding range, on each occasion.

The drive voltage pulse or the first drive voltage pulse may begin immediately the rotor enters the said range. Alternatively, the beginning of the or the first drive voltage pulse may be delayed after the rotor enters the said range. The length of the delay is preferably set in accordance with the desired motor speed. The length of the delay may be chosen to make the drive voltage pulse or pulses symmetrical in time about a selected point in the time period of the rotor passing through the said range. The selected point may be mid-way through the time period.

The aggregate duration may be set as a percentage of the said time period. Alternatively, the aggregate duration may be set as a time predetermined to correspond with the desired motor speed. The or each field coil may be energised as aforesaid during a plurality of corresponding predetermined ranges of angular positions. The or each field coil may be energised in a first direction in a first range, and a second direction in a second range.

Preferably, the speed of the motor is monitored for comparison with the desired motor speed, the aggregate duration being set at least partly in dependence on the result of the comparison. A signal representing a series of drive voltage pulses may be integrated to obtain a result representative of the aggregate duration as a percentage of the time period, for comparison with a value representative of the desired motor speed, the aggregate duration being modified at least in part in dependence on the result of the comparison. Alternatively, the absolute speed of the motor may be detected for comparison with the desired motor speed, the aggregate duration being modified at least in part in dependence on the result of the comparison. In a further alternative, the length of the time period is measured for comparison with the length corresponding with the desired motor speed, and the aggregate duration is set at least in part in dependence on the result of the comparison.

The invention also provides control apparatus for controlling the speed of a brushless electric motor which has a rotor and at least one field coil to which drive voltage is supplied, in use, to cause the rotor to turn, comprising drive voltage means, operable to provide drive voltage to the coil during a time period in which the rotor is travelling through a corresponding predetermined range of angular positions, drive voltage being supplied as at least one pulse provided synchronously on each occasion the rotor enters the said range, and further comprising pulse duration means operable to set the aggregate duration of the pulse or pulses in accordance with the desired motor speed.

Preferably, a single pulse is generated synchronously with the coil entering the corresponding range, on each occasion. The drive voltage pulse or the first drive may begin immediately the rotor enters the said range. The beginning of the or the first drive voltage pulse may be delayed after the rotor enters the said range. The length of the delay may be set in accordance with the desired motor speed. The length of the delay may be chosen to make the drive voltage pulse or pulses symmetrical in time about a selected point in the time period of the rotor passing through the said range. The selected point may be mid-way through the time period.

The aggregate duration may be set as a percentage of the said time period. Alternatively, the aggregate duration may be set as a time predetermined to correspond with the desired motor speed. The or each field coil may be energised as aforesaid during a plurality of corresponding predetermined ranges of angular positions. The or each field coil may be energised in a first direction in a first range, and a second direction in a second range.

Preferably, comparison means are operable to compare the speed of the motor with the desired motor speed, the aggregate duration being set at least partly in dependence on the result of the comparison. Preferably, the comparison means comprises integrator means operable to integrate a signal representing a series of drive voltage pulses, to obtain a result representative of the aggregate duration as a percentage of the time period, and to compare the result with a value representative of the desired motor speed, the aggregate duration being modified at least in part in dependence on the result of the comparison. Alternatively, comparison means may comprise speed means operable to measure the absolute speed of the motor and to compare the absolute speed with the desired motor speed, the aggregate duration being modified at least in part in dependence on the result of the comparison. In a further alternative, comparison means may comprise time period means operable to measure the length of the time period measured and to compare the length with the length corresponding with the desired motor speed, and to set the aggregate duration at least in part in dependence on the result of the comparison.

Embodiments of the present invention will now be described in more detail, by way of example only, and with reference to the accompanying drawings, in which:

Figs. 1a and 1b are, respectively, a schematic section and perspective view of a simple brushless motor of the type with which the present invention may be implemented;

Figs. 2a to 2c represent drive voltage applied to the motor of Fig. 1, at high, intermediate and low speeds;

Fig. 3 is a schematic diagram, corresponding with Fig. 1a, showing a motor with multiple drive coils;

Figs. 4 and 5 schematically illustrate drive voltage to the coils of the motor of Fig. 3, at a relatively high and relatively low speed, respectively; and

Figs. 6 to 8 illustrate three examples of control arrangements for the motor of Fig. 1.

Figs. 9a to 9f show drive voltage pulses for, respectively, a motor running at full speed, a motor controlled in the same manner illustrated in Fig. 2, and a motor controlled in accordance with further examples of the invention.

Brushless Electric Motor

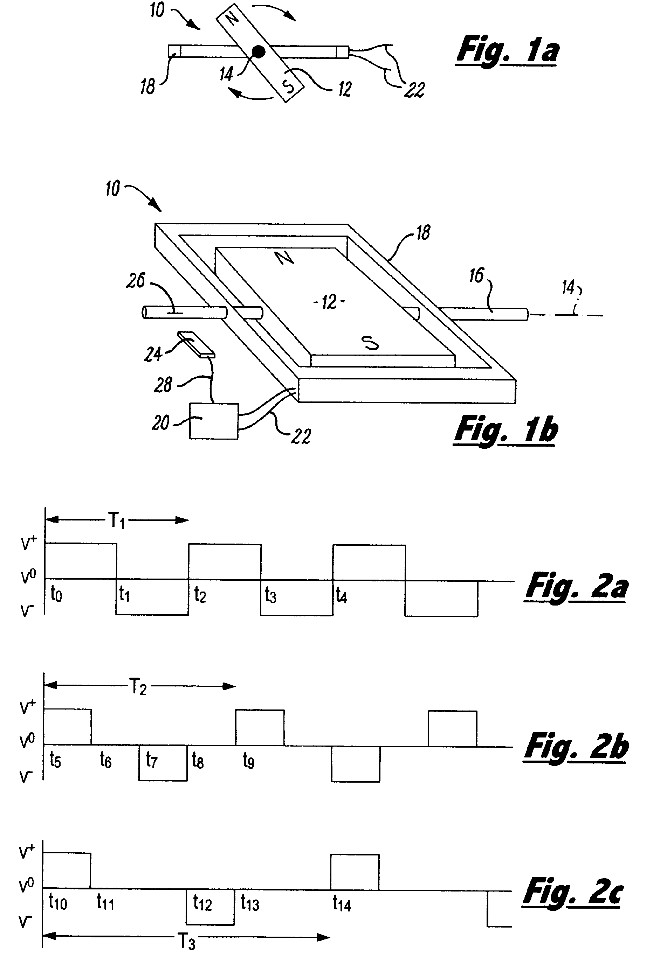

Figs. 1a and 1b illustrate a simple form of brushless electric motor of the type with which the present invention may be implemented. The motor 10 has a rotor 12 mounted for rotation about an axis 14, for example by means of a shaft 16. A drive coil 18 is located around the rotor 12. A control arrangement 20 provides drive current to the coil 18, at 22. A detector 24, such as a Hall effect probe is provided alongside the shaft 16, which carries at least one permanent magnet 26, allowing the detector 24 to detect the magnet 26 as it passes the detector 24, and thus allowing the detector 24 to obtain information about the angular position of the rotor 12. The detector 24 is connected at 28 to the control arrangement 20, to allow the control arrangement 20 to make use of this position information, as will be described.

In this simple example, the rotor 12 may be permanently magnetised. If drive current is supplied to the coil 18 in one sense, the rotor 12 will tend to turn to align the permanent magnet with the resulting magnetic field. If the direction of drive current is then reversed, to reverse the magnetic field, the rotor 12 will tend to turn through 180°, to align in the opposite direction. Accordingly, repeatedly reversing the drive current to the coil 18 allows the rotor 12 to be driven to rotate. Reversal of the drive current is controlled by the control arrangement 20.

The arrangement which has been described is a very simple example of a brushless motor, but is sufficient to allow the nature of the invention to be described. Many other brushless motor designs of greater complexity are known. For example, multiple drive coils may be used to provide more even torque output. The permanent magnet and drive coils may be reversed in position, so that the drive coils are carried by the rotor, surrounded by permanent magnets. In either alternative, a permanent magnet may be replaced by a continuously driven coil.

After the following description has been fully understood, it will be apparent to the skilled reader how the present invention may be applied to many brushless motor designs in addition to those specifically described.

Drive Voltage (Full Speed)

Fig. 2a illustrates the drive voltage applied to the coil 18 when the motor 10 is operating at full speed. The drive voltage is repeatedly reversed from a positive value $V^+$ and a negative value $V^-$, so that the excitation voltage is a square wave, as shown. The voltages $V^+$ and $V^-$ are symmetrical about a reference voltage $V^0$. Switching of the voltage between $V^+$ and $V^-$ occurs twice in each complete period of the square wave. The period is represented as $T_1$ in Fig. 2a. Switching to the positive voltage $V^+$ occurs at times $t_0$, $t_2$ and $t_4$ in Fig. 2a. Switching to the negative voltage $V^-$ occurs at times $t_1$ and $t_3$.

Each switching time is selected by reference to the output of the detector 24, which is used to detect two angular positions of the rotor 12, these two positions being 180° apart. Thus, on each occasion that the rotor 12 enters one or other of the two ranges of 180° of angular position, this is detected by the detector 24 and the control arrangement 20 reverses the drive voltage. This results in the drive coil 18 being energised by a series of pulses of alternating sense, each having a duration equal to one half of the period $T_1$, and supplied synchronously with the rotation of the rotor 12.

The use of a square wave supplies maximum power to the drive coil 18 and thus results in the maximum motor speed.

Drive Voltage (75% Speed)

Fig. 2b illustrates an alternative voltage waveform, illustrated when the motor 10 is operating stably at a speed of approximately 75% of maximum speed.

In this example, and the others described below, transients which arise in the voltage waveform are not shown. These may result from back emf effects in motor coils, for example.

Thus, the pulses are again synchronous with the rotation of the rotor 12.

Voltage pulses at the positive and negative voltages $V^+$, $V^-$ are again initiated as the rotor 12 enters one or other of the 180° ranges of angular position, as detected by the detector 24. The pulses are initiated at times $t_5$, $t_7$ and $t_9$ in Fig. 2b. The slower speed of the motor results in a longer period $T_2$ for the waveform of Fig. 2b, i.e., $T_2$ is greater than $T_1$. Furthermore, it is readily apparent that the waveform of Fig. 2b is not a square wave. Specifically, the positive pulse at $V^+$, commencing at $t_5$, does not continue for one half of the period $T_2$, but drops to $V^0$ at an intermediate time $t_6$, thus de-energising the coil 18. The coil then remains de-energised until $t_7$, when a negative-going pulse (V) commences. Again, the negative going pulse does not continue until the end of the period $T_2$ (at $t_9$), but rises to $V^0$ at an intermediate time $t_8$.

Consequently, the coil 18 is not continuously energised, but only between times $t_5$ and $t_6$, and between times $t_7$ and $t_8$, and between corresponding times in subsequent cycles. No energy is being supplied between times $t_6$ and $t_7$ or between times $t_8$ and $t_9$. This reduces the effective power delivered to the motor 10, in comparison with the arrangement of Fig. 2a, and thus results in the slower motor speed and longer period $T_2$.

It has been found in practice, with one arrangement, that a motor speed of approximately 75% of maximum speed results from pulse lengths of approximately one quarter of the period (i.e. when $t_6 - t_5 = t_7 - t_6$, and $t_8 - t_7 = t_9 - t_8$). However, this relationship is mentioned only for illustrative purposes. The precise ratio achieved in practice will depend on motor design and may also be affected by operating conditions, such as load, operating temperature etc.

It will be realised that the voltage pulses could be divided into more than one pulse, but a single pulse is preferred, for reasons set out below. When a train of pulses is used, the aggregate duration of the pulses should be equal to the duration calculated as described above.

Drive Voltage (50% Speed)

Fig. 2c illustrates a further excitation voltage waveform for the drive coil 18, when the motor 10 is operating at approximately 50% of full speed. This waveform has a period $T_3$, where $T_3 = 2 T_1$. The waveform of Fig. 2c again has a positive pulse (between times $t_{10}$ and $t_{11}$) followed by a de-energised period (between times $t_{11}$ and $t_{12}$), a negative-going pulse(between times $t_{12}$ and $t_{13}$) and a further de-energised period (between times $t_{13}$ and $t_{14}$). Thus, the voltage pulses are again synchronous with the rotation of the rotor. Practical experience of one motor arrangement has indicated that for a motor speed of 50% of maximum speed, the coil will be energised for approximately 25% of the time. That is, the ratio of energised and de-energised times will be given approximately as $3 (t_{11} - t_{10}) = t_{12} - t_{11}$ and $3 (t_{13} - t_{12}) = t_{14} - t_{13}$. However, the precise ratio achieved in practice will again depend on motor design and operating conditions etc.

Again, each voltage pulse may be divided into a train of more than one pulse, having the required aggregate duration.

Three-Winding Motor

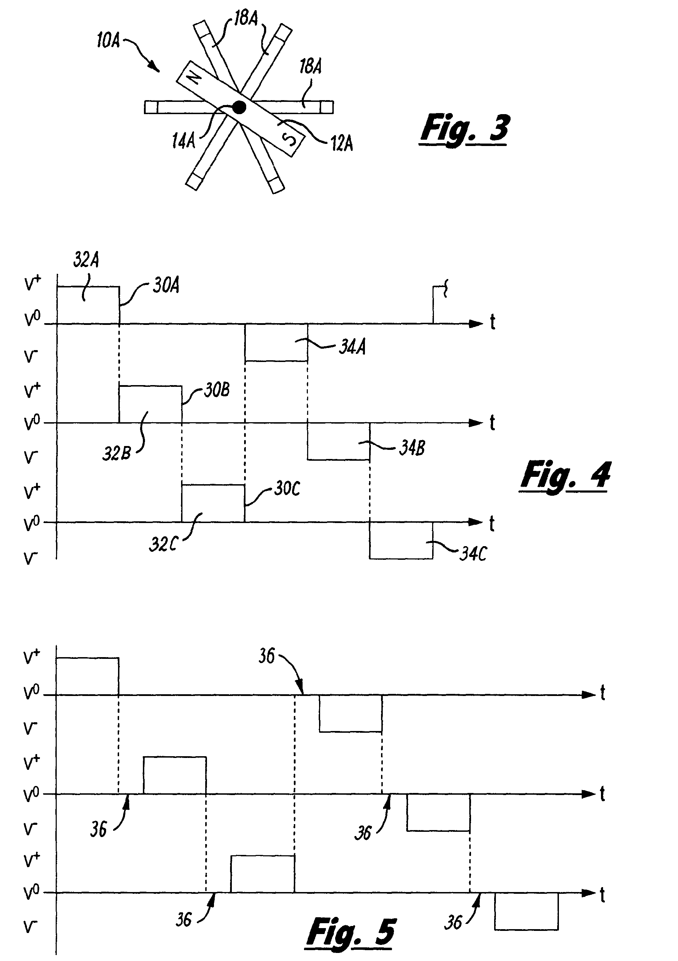

The principles described above can readily be extended to more complex motors, as can now be described in relation to Figs. 3, 4 and 5.

Fig. 3 corresponds generally with Fig. 1a, showing a motor 10A having a rotor 12A, rotatable about an axis 14A which is perpendicular to the plane of the drawing. Three drive coils 18A are provided, spaced at angles of 60° around the axis 14A.

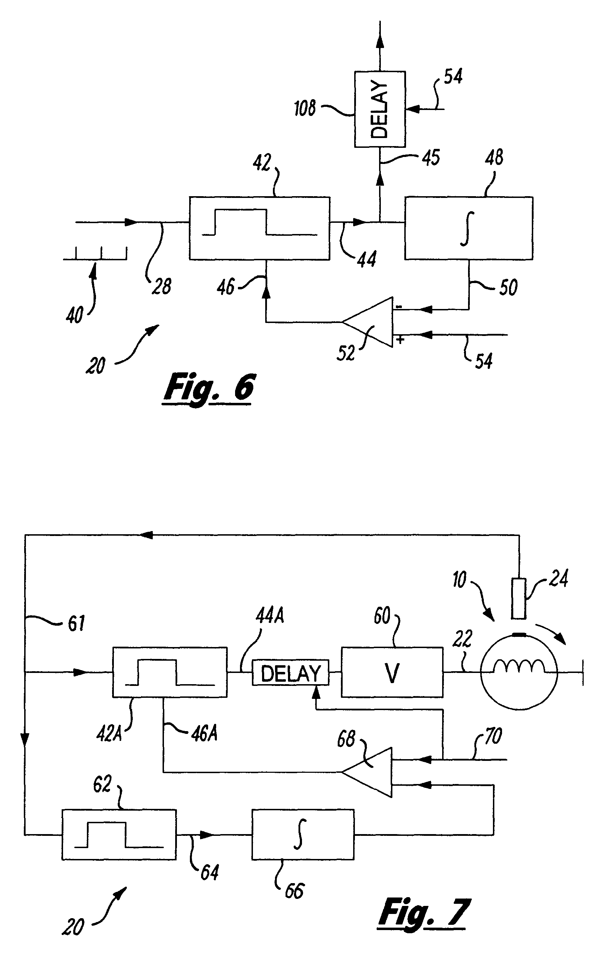

The motor 10A can be driven at maximum speed by energising each coil 18A in succession, as shown in Fig. 4. This shows three voltage waveforms 30 applied to respective drive coils 18A. The waveforms 30A, B, C are shown on the same time axis. Thus, it can be seen that waveform 30A has a positive voltage pulse at 32A, which is immediately followed by a positive pulse at 32B in the second waveform 30B. This is in turn immediately followed by a positive pulse 32C in the waveform 30C. Positive pulse 32C is then immediately followed by a negative pulse 34A in the waveform 30A, which is immediately followed by a negative pulse 34B in the waveform 30B. Negative pulse 34B is immediately followed by a negative pulse 34C in the waveform 30C.

Consequently, it will be apparent that the motor is being continuously supplied with energy and thus, the waveforms of Fig. 4 represent full motor speed.

The pulses supplied to each coil are synchronous with the rotation of the rotor, and specifically, they are synchronous with the rotor entering a respective predetermined range of 60° of angular travel, or a second range of 60° positioned opposite the first range. Thus, a total of 6 ranges are predetermined, two corresponding with each of the three coils.

Fig. 5 represents waveforms used to achieve a reduced speed. Fig. 5 is drawn on the same time axis as Fig. 4. Two differences are therefore immediately apparent. First, the period of the waveforms in Fig. 5 is longer than the period of the waveforms in Fig. 4, as a result of the slower motor speed. Furthermore, each pulse of the waveforms in Fig. 5 (whether positive or negative), does not begin until a delay has elapsed since the previous pulse (in another waveform) ended, thus leaving periods of time at 36 in which no excitation voltage is being applied to any of the coils 18A. It is these gaps 36 which result in the energy to the motor being reduced, and thus results in a reduction in motor speed.

However, the pulses supplied to each coil remain synchronous with the respective predetermined ranges of rotor position.

Again, each voltage pulse could be replaced by a train of more than one pulse, having the required aggregate duration, but a single pulse is preferred.

Control Arrangement (First Embodiment)

Fig. 6 illustrates a first embodiment for an analogue control arrangement 20. The arrangement 20 receives an input pulse from the detector 24, each time the rotor 12 enters the or one of the predetermined ranges of angular positions. The arrangement 20 will be described in relation to the motor 10 of Fig. 1, for simplicity, so that pulses 40 are received at twice the frequency of the rotor rotation. These pulses will be referred to as commutation pulses, since they are used to initiate a reversal of excitation voltages.

The commutation pulses are used as trigger pulses for a retriggerable, voltage controlled monostable pulse generator 42. This responds to each trigger pulse to produce an output pulse at 44, having a duration set by a control voltage at 46.

The output pulse 44 is applied to an integrator 48 to produce an integrated output at 50, applied as the negative input to a differential amplifier 52. The output pulse 44 is also used at 45 to control the application of drive voltage to the drive coil 18. The length of each pulse in the drive waveform is $T_{on}$, and the period of the drive waveforms is $T_{period}$.

Accordingly, the differential amplifier 52 receives a negative input which is proportional to the ratio of the duration of pulses at 44, to the period of the pulses 40, thus:

$$V_I \propto T_{on}/T_{period}$$

where

$T_{on}$ is the duration of an output pulse at 44;
$T_{period}$ is the period of the commutation pulses at 40.

The positive input to the amplifier 52 is a control voltage at 54.

The output of the differential amplifier is thus given by $A(V_{set} - T_{on}/T_{off})$, where $V_{set}$ is the control input voltage at 46. The output of the differential amplifier forms the control input 46 to the monostable 42.

Consequently, as $V_{set}$ is changed, the control input 46 changes to adjust the length of the output pulse 44, thus changing the energy input to the motor (and thus the motor speed), and also changing the input to the integrator 48. The monostable 42, integrator 48 and differential amplifier 52 form a closed loop control system to maintain a desired speed set by the value of $V_{set}$.

Thus, the commutator pulses have been integrated to obtain a value representing the ratio of the time on, to the total cycle period (which value may be described as the duty cycle). This value is compared with a value $V_{set}$ representing the desired speed, and the monostable setting is adjusted in dependence on the result of the comparison, to achieve the desired speed.

However, while the motor speed achieved by the circuit of Fig. 6 is controlled by $V_{set}$, the absolute value achieved is affected by external factors, such as motor load. Fig. 7 illustrates an improved arrangement, which takes this into account, as follows.

Control Arrangement (Second Embodiment)

Fig. 7 illustrates an alternative analogue arrangement for closed loop speed control. The motor 10 is driven by drive voltage at 22 from a voltage source 60. The position of the rotor 12 is sensed by the detector 24 which produces a train of commutation pulses at 61, which are applied to trigger a monostable 42A. The monostable 42A is a retriggerable voltage controlled device having a control input 46A which determines the length of output pulse applied by the monostable 42A at 44A, to turn on the voltage supply 60. Thus, each commutation pulse causes a pulse of drive voltage for a time determined by the monostable 42A.

Commutation pulses are also fed to a second monostable device 62 which provides output pulses at 64, of fixed length. These are integrated by an integrator 66, the output of which is fed to a differential amplifier 68 for comparison with a control voltage supplied at 70. The output of the differential amplifier 68 forms the control input 46A to the voltage control monostable 42A. The control voltage at 70 is representative of the motor speed required. Consequently, the arrangement of the monostable 62, integrator 66 and differential amplifier 68 function in a manner similar to that described above in relation to Fig. 6, except that the pulses integrated by the integrator 66 are of fixed length and are thus dependent on the commutation pulse frequency, but are not dependent on the duration of drive pulses to the motor. Accordingly, the differential amplifier 68 results in the commutation frequency, and hence the actual motor speed, being brought into line with the desired motor speed represented by the control voltage 70.

Thus, in this example, commutation pulses are used to trigger a one shot pulse generator, the output of which is integrated to provide a value representative of the actual speed of the motor. This is compared with the desired speed and the length of excitation pulses is modified in dependence on the outcome of the comparison.

Control Arrangement (Third Embodiment)

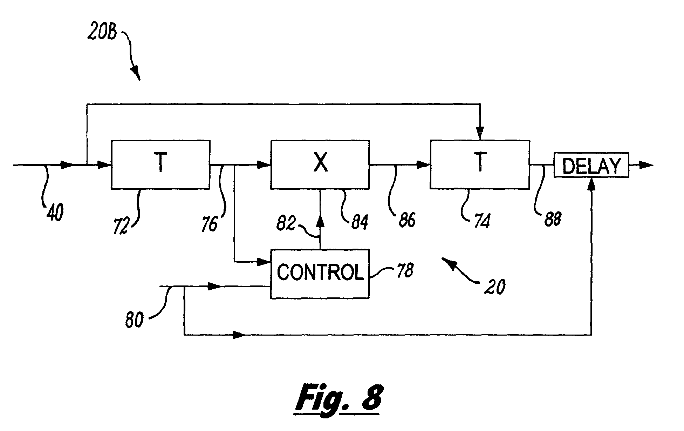

Fig. 8 illustrates a digital implementation for the control arrangement. The digital control arrangement 20B again receives commutation pulses at 40, created as described above. These are applied to a first timer 72 and a second timer 74. The first timer 72 measures the period of the commutation pulses 40 to provide an output at 76 which represents motor speed. This is applied to a control circuit 78 which also has a control input 80, representing the required motor speed. The control circuit 78 compares the two inputs 76, 80, to determine if the motor is running at the desired speed, faster or slower. The circuit 78 then makes a determination of the required pulse duration, as a percentage of the period of the excitation waveform. This output, at 82 is applied to a multiplier circuit 84, which also receives the output 76 to produce an output at 86 representing the required duration of each voltage pulse applied to the motor.

The second timer 74 receives the output of the multiplier 84, and produces an output pulse 88 of the required duration, synchronised with the commutation pulses 40. The output 88 is used to energise the motor for the duration of the pulse at 88.

Thus, this example times the period of commutation pulses, compares that with the time required for the desired motor speed, and sets the duration of subsequent excitation pulses in dependence on the result of the comparison.

Centralised Pulses

In each of the examples described above, the voltage pulses are triggered by the commutation pulses 40 and commence immediately. Thus, although the voltage pulses have a pulse duration which changes in accordance with the required motor speed, both in relation to their absolute duration, and their duration as a percentage of the time between commutation pulses, they always occupy the beginning of the time period between commutation pulses and are then followed by a gap in which there is no excitation applied.

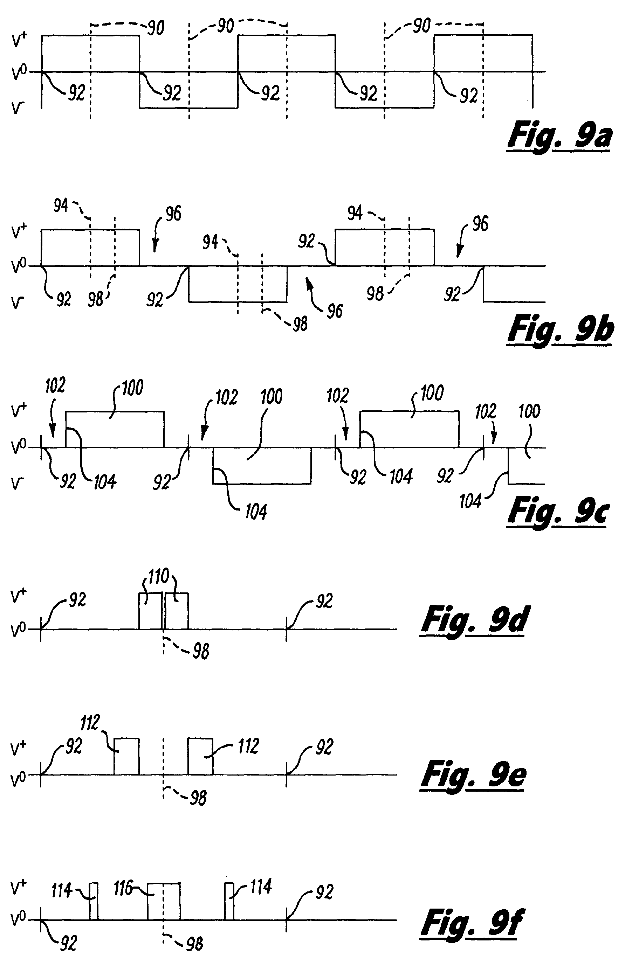

At full speed, when the voltage pulse occupies the full duration of the period between commutation pulses (Fig. 9a), the excitation waveform has a symmetrical form in which each voltage pulse is symmetrical about a mid point (in time) 90, which is itself mid-way (in time) between the times 92 at which the waveform reverses in polarity.

Fig. 9b shows an excitation waveform corresponding with Fig. 2b, produced in the manner described above. Again, each voltage pulse is symmetrical about a mid point 94 but because the voltage pulse starts when polarity reverses at 92, and is followed by a gap 96, the mid point 94 no longer coincides with the time 98 which is mid-way between the polarity reversals 92.

Thus, energy input to the motor, centred at 94, is no longer centred mid-way between the polarity reversal points 92. We have found, in practice, that this can result in an increase in the running temperature of the motor, which we understand to arise because these aspects of symmetry of energy input to the motor have been broken.

Accordingly, we propose a further improvement illustrated in Fig. 9c. In this example, the motor is assumed to be running at the same speed as shown in Fig. 9b. Accordingly, the separation of polarity reversal points 92 is the same as in Fig. 9b and the length of voltage pulses 100 is also the same as shown in Fig. 9b. However, the pulses 100 do not begin immediately at each polarity reversal point 92. A delay 102 occurs between each polarity reversal point 92, and the beginning 104 of a voltage pulse. The length of the delay 102 is chosen to restore symmetry in the waveform, by returning the mid point in time of the pulses 100 to be coincident with the mid point in time between the polarity reversals 92. We have found that this allows the motor to run at a lower temperature, which we understand to arise because of increased efficiency in operation of the motor. The required delay will depend on the duration of the pulses 100, and on the time separation of the polarity reversal points 92.

Thus, in the arrangement illustrated in Fig. 9c, the intention is to restore the position in time of each pulse 100, to be symmetrical within the period between polarity reversal points 92. This is believed to optimise motor efficiency.

In other situations, other lengths of delay 102 can be envisaged (without changing the length of the pulse 100) in order to modify performance characteristics of the motor. This has the effect of moving the mid point (in time) of each pulse, relative to the mid-point (in time) between the polarity reversal points. For example, the mid point in time of the pulses 100 may be moved in accordance with the load on the motor or other motor characteristics, such as torque. The mid point may be moved dynamically, for example in dependence on load, control settings, running speed, torque output required, running temperature or other factors.

In each of these alternatives, the pulses remain synchronous with the rotation of the rotor.

The delay 102 can be achieved by means of any of the arrangements of Figs. 6 to 8 by simple modification illustrated in those figures by broken lines. In Fig. 6, a delay circuit 108 is incorporated in the output 45 to delay output pulses 44. The delay circuit 108 is preferably a voltage controlled variable delay which may be controlled by the control voltage 54 indicating the desired speed set by the value of $V_{set}$.

In the second embodiment (Fig. 7), a voltage controlled delay 108 can be introduced between the monostable 42A and the voltage supply 60, the delay 108 being provided with the control voltage 70 which is representative of the required motor speed. In the third embodiment (Fig. 8) delay 108 is introduced into the output 88, controlled by the control input 80.

In each of these modifications, it is necessary for the delay circuit 108 either to calculate the necessary delay 102 to achieve the required position of the pulse 100 between the reversal points 92, or for a feedback arrangement to be provided to allow variation from the desired position to be detected and corrected. It is to be remembered that the absolute length of the delay, required to place the pulses at the required positions (in time) between the reversal points 92, is affected by the separation (in time) of the reversal points. Hence, the delay required to centre a pulse is dependent on motor speed, which determines the pulse length and the separation of reversal points.

The skilled reader will readily understand that arrangements for controlling the position of the pulses within the period between polarity reversal points 92 can readily be applied to motors with multiple windings.

Instead of using a delay circuit 108, an alternative possibility is to move the detector 24, according to the required delay 102. Thus, in this alternative, voltage pulses would begin immediately on receipt of commutation pulses, from the detector 24, but the creation of those pulses by the detector 24 can be delayed by moving the detector 24 to a different angular position around the rotor 12. Whereas the previous examples have assumed that the entry of the rotor into a predetermined range of angular positions is always coincident with the creation of a commutation pulse from the detector 24, this alternative introduces a delay between those two events.

Figs. 9d, e and f show further examples for supplying voltage pulses. Fig. 9d shows one half-cycle of the motor when running more slowly than in Figs. 9a to 9c. Thus, the time between polarity reversal points 92 is longer. This speed is created by two voltage pulses 110. These pulses are very close together in time, and located to either side of the mid point 98 between polarity reversals. The duration of each pulse 110 is the same. The aggregate duration of both pulses represents the energy supplied during the half-cycle illustrated. Accordingly, the aggregate duration of the two pulses 110 is set in accordance with the desired motor speed, as has been described above. In the example of Fig. 9d, the mid point in time of energy input by the pulses 110 is coincident with the mid points 98 and the energy input is concentrated close to the mid point 98.

In the example of Fig. 9e, two pulses 112 are used. Each pulse is the same length as one of the pulses 110. Consequently, the aggregate duration of the pulses 112 is the same as the aggregate duration of the pulses 110 and thus, the motor speed is the same and the separation of the polarity reversal points 92 is the same. However, the pulses 112 are spaced further apart in time than the pulses 110. Thus, while the mid point in time of energy input into the motor remains at the mid point 98, there is a different time profile of energy input to the motor.

A further example is illustrated in Fig. 9f. In this example, two relatively short pulses 114 are placed before and after a longer pulse 116. In this example, the aggregate duration of the pulses 114, 116 is the same as the aggregate duration of the pulses 110 and the aggregate duration of the pulses 112. Energy input to the motor is concentrated around the mid points 98, by the pulse 116, with additional energy input from the pulses 114. Thus, the total time profile of energy input to the motor resembles, more closely than in the examples of Figs. 9d and 9e, a sinusoidal energy input to the motor.

It can thus be seen from these examples that by varying the number of pulses and their position in time, while retaining the aggregate duration set in accordance with the desired motor speed, it is possible to vary widely the profile of the energy input to the motor.

Pulse trains illustrated like those in Figs. 9d to 9f can be created by appropriate modification of the circuits of Figs. 6 to 8 to convert their output pulses into an appropriate train of pulses.

Variations and Modifications

In each of the three examples described in relation to Figs. 6, 7 and 8, and the further modifications, the arrangements compare the speed which has been achieved and the speed required, and adjust the length of excitation pulses in dependence on the result of the comparison.

In addition to the various alternative forms of motor with which the present invention may be embodied, as noted above, it will be readily apparent from the above description that many different implementations of the necessary control arrangements may be made, using analogue or digital technology, or a mixture of such technologies. In the case of digital technologies, components of the arrangement may be implemented in digital hardware or software or a combination of both technologies.

In further alternatives, the control arrangements may receive inputs, such as manual inputs, representing the ratio required for the duty cycle of the excitation voltages, or may incorporate a look-up table from which a duty cycle ratio may be obtained in response to an input representing desired motor speed. This would result in greater simplicity, but relies on assumptions about the relationship between duty cycle and motor speed, which may not be fixed throughout the practical range of operating conditions.

An advantage of the arrangements described above is that only a small number of switching operations take place in each cycle. In particular, the number of switching operations is significantly reduced in comparison with an approach based on pulse width modulation (which might typically involve switching at a switching frequency several orders of magnitude higher than the switching frequency required by the present invention, in order to place the switching frequency above the audible range). High switching frequencies associated with pulse width modulation can result in unwarranted noise, electromagnetic interference and the generation of excessive heat, particularly within semiconductor devices used to execute switching.

In the examples described above, with the exception of Figs. 9d to 9f, only two switching operations are required, to begin and end each pulse. In the examples of Figs. 9d to 9f, a greater number of switching operations will arise as the single pulses are broken into a train of an increasing number of pulses. However, the number remains relatively low in comparison with a conventional pulse width modulation approach. Moreover, the pulse or pulses of each of the examples are maintained to be synchronous with the rotation of the motor. In view of the desirability of reducing the number of switching operations, we prefer the use of single pulses or pulse trains only having a small number of pulses.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of controlling the speed of a brushless electric motor which has a rotor and at least one field coil to which drive voltage is supplied, in use, to cause the rotor to turn, wherein the or each field coil is energised by drive voltages supplied during a time period in which the rotor is travelling through a corresponding predetermined range of angular positions, and wherein at least one pulse of drive voltage is supplied to the or each coil synchronously with the coil entering the corresponding range, the pulse or pulses having an aggregateduration which is set in accordance with the desired motor speed.

2. A method according to claim 1, wherein a single pulse is generated synchronously with the coil entering the corresponding range, on each occasion.

3. A method according to claim 1 or 2, in which the drive voltage pulse or the first drive voltage pulse begins immediately the rotor enters the said range.

4. A method according to claim 1 or 2, in which the beginning of the or the first drive voltage pulse is delayed after the rotor enters the said range.

5. A method according to claim 4, wherein the length of the delay is set in accordance with the desired motor speed.

6. A method according to claim 4 or 5, wherein the length of the delay is chosen to make the drive voltage pulse or pulses symmetrical in time about a selected point in the time period of the rotor passing through the said range.

7. A method according to claim 6, wherein the selected point is mid-way through the time period.

8. A method according to any preceding claim, wherein the aggregate duration is set as a percentage of the said time period.

9. A method according to any preceding claim, wherein the aggregate duration is set as a time predetermined to correspond with the desired motor speed.

10. A method according to any preceding claim, wherein the or each field coil is energised as aforesaid during a plurality of corresponding predetermined ranges of angular positions.

11. A method according to claim 10, wherein the or each field is energised in a first direction in a first range, and a second direction in a second range.

12. A method according to any preceding claim, wherein the speed of the motor is monitored for comparison with the desired motor speed, the aggregate duration being set at least partly in dependence on the result of the comparison.

13. A method according to claim 12, wherein a signal representing a series of drive voltage pulses is integrated to obtain a result representative of the aggregate duration as a percentage of the time period, for comparison with a value representative of the desired motor speed, the aggregate duration being modified at least in part in dependence on the result of the comparison.

14. A method according to claim 12, wherein the absolute speed of the motor is detected for comparison with the desired motor speed, the aggregate duration being modified at least in part in dependence on the result of the comparison.

15. A method according to claim 12, wherein the length of the time period is measured for comparison with the length corresponding with the desired motor speed, and the aggregate duration is set at least in part in dependence on the result of the comparison.

16. A method of controlling the speed of a brushless electric motor, substantially as described above, with reference to the accompanying drawings.

17. Control apparatus for controlling the speed of a brushless electric motor which has a rotor and at least one field coil to which drive voltage is supplied, in use, to cause the rotor to turn, comprising drive voltage wherein the means, operable to provide drive voltage to the or each coil during a time period in which the rotor is travelling through a corresponding predetermined range of angular positions, drive voltage being supplied as at least one pulse provided synchronously on each occasion the rotor enters the said range, and further comprising pulse duration means operable to set the aggregate duration of the pulse or pulses in accordance with the desired motor speed.

18. Apparatus according to claim 17, wherein a single pulse is generated synchronously with the coil entering the corresponding range, on each occasion.

19. Apparatus according to claim 17 or 18, in which the drive voltage pulse or the first drive voltage pulse begins immediately the rotor enters the said range.

20. Apparatus according to claim 17 or 18, in which the beginning of the or the first drive voltage pulse is delayed after the rotor enters the said range.

21. Apparatus according to claim 20, wherein the length of the delay is set in accordance with the desired motor speed.

22. Apparatus according to claim 20 or 21, wherein the length of the delay is chosen to make the drive voltage pulse or pulses symmetrical in time about a selected point in the time period of the rotor passing through the said range.

23. Apparatus according to claim 22, wherein the selected point is mid-way through the time period.

24. Apparatus according to any of claims 17 to 23, wherein the aggregate duration is set as a percentage of the said time period.

25. Apparatus according to any of claims 17 to 24, wherein the aggregate duration is set as a time predetermined to correspond with the desired motor speed.

26. Apparatus according to any of claims 17 to 25, wherein the or each field coil is energised as aforesaid during a plurality of corresponding predetermined ranges of angular positions.

27. Apparatus according to claim 26, wherein the or each field coil is energised in a first direction in a first range, and a second direction in a second range.

28. Apparatus according to any of claims 16 to 25, wherein comparison means are operable to compare the speed of the motor with the desired motor speed, the aggregate duration being set at least partly in dependence on the result of the comparison.

29. Apparatus according to claim 28, wherein the comparison means comprises integrator means operable to integrate a signal representing a series of drive voltage pulses, to obtain a result representative of the aggregate duration as a percentage of the time period, and to compare the result with a value representative of the desired motor speed, the aggregate duration being modified at least in part in dependence on the result of the comparison.

30. Apparatus according to claim 28, wherein comparison means comprise speed means operable to measure the absolute speed of the motor and to compare the absolute speed with the desired motor speed, the aggregate duration being modified at least in part in dependence on the result of the comparison.

31. Apparatus according to claim 28, wherein comparison means comprise time period means operable to measure the length of the time period measured and to compare the length with the length corresponding with the desired motor speed, and to set the aggregate duration at least in part in dependence on the result of the comparison.

32. Control apparatus for controlling the speed of a brushless electric motor, substantially as described above, with reference to the accompanying drawings.

33. Any novel subject matter or combination including novel subject matter disclosed herein, whether or not within the scope of or relating to the same invention as any of the preceding claims.

*Fig. 1a*

*Fig. 1b*

*Fig. 2a*

*Fig. 2b*

*Fig. 2c*

*Fig. 3*

*Fig. 4*

*Fig. 5*

**_Fig. 6_**

**_Fig. 7_**

*Fig. 8*

*Fig. 9a*

*Fig. 9b*

*Fig. 9c*

*Fig. 9d*

*Fig. 9e*

*Fig. 9f*

**European Patent Office**

## EUROPEAN SEARCH REPORT

Application Number

EP 05 25 0212

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 431 604 A (MATSUSHITA ELECTRIC INDUSTRIAL CO., LTD)<br>12 June 1991 (1991-06-12)<br>* column 6, lines 13-19; figure 1 *<br>* column 4, lines 25-40; figure 2 *<br>* column 4, lines 3-18; figures 6-8 *<br>* column 5, lines 43-47 * | 1,17 | H02K21/14<br>H02K29/08<br>H02K29/14 |
| Y | * column 4, lines 3-40; figures 1,6-8 * | 2-16, 18-33 | |
| Y | US 2002/074968 A1 (MITSUDA TSUYOSHI)<br>20 June 2002 (2002-06-20)<br>* figures 1,4,5,8b,c,11d * | 1-33 | |
| Y | GB 1 055 054 A (GENERAL ELECTRIC COMPNAY)<br>11 January 1967 (1967-01-11)<br>* page 4, lines 5-22; figures 1,2,9,15 * | 1-33 | |
| | | | TECHNICAL FIELDS SEARCHED (Int.Cl.7)<br><br>H02K |

The present search report has been drawn up for all claims

| Place of search | Date of completion of the search | Examiner |
|---|---|---|
| Munich | 26 April 2005 | Kanelis, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 05 25 0212

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2005

| Patent document cited in search report | | Publication date | Patent family member(s) | | Publication date |
|---|---|---|---|---|---|
| EP 0431604 | A | 12-06-1991 | JP | 2867665 B2 | 08-03-1999 |
| | | | JP | 4119544 A | 21-04-1992 |
| | | | JP | 3178007 A | 02-08-1991 |
| | | | JP | 3211085 B2 | 25-09-2001 |
| | | | DE | 69018207 D1 | 04-05-1995 |
| | | | DE | 69018207 T2 | 27-07-1995 |
| | | | EP | 0431604 A2 | 12-06-1991 |
| | | | US | 5317548 A | 31-05-1994 |
| US 2002074968 | A1 | 20-06-2002 | JP | 2002119081 A | 19-04-2002 |
| | | | TW | 543275 B | 21-07-2003 |
| GB 1055054 | A | 11-01-1967 | US | 3142012 A | 21-07-1964 |
| | | | US | 3161813 A | 15-12-1964 |
| | | | CH | 414474 A | 15-02-1966 |
| | | | DE | 1413493 A1 | 27-03-1969 |
| | | | JP | 49017329 B | 30-04-1974 |
| | | | SE | 307771 B | 13-01-1969 |

EPO FORM P0459

For more details about this annex : see Official Journal of the European Patent Office, No. 12/82